# EUROPÄISCHE PATENTANMELDUNG

(11) **EP 2 386 778 A2**
(43) Veröffentlichungstag der Anmeldung: **16.11.2011**
(21) Anmeldenummer: 11161838.5
(22) Anmeldetag: 11.04.2011
(51) Int. Cl.: F16F 9/348, F16F 9/516

(54) **Dämpfventileinrichtung mit einer mehrstufigen Dämpfkraftkennlinie**

(30) Priorität: 11.05.2010 DE 102010028841
(71) Anmelder: ZF Friedrichshafen AG, 88038 Friedrichshafen (DE)
(72) Erfinder: Braunreuther, Hubert, 97437, Haßfurt (DE); Moller, Robert, 97491, Aidhausen (DE)

(57) **Zusammenfassung**

Dämpfventileinrichtung (3) für einen Schwingungsdämpfer (1) , umfassend einen ersten und einen zweiten Dämpfventilkörper (9,25) mit mindestens zwei hydraulisch parallel geschalteten Durchtrittskanälen für eine Strömungsrichtung (15,33) eines Dämpfmedium, wobei Austrittsquerschnitte der mindestens zwei Durchtrittskanäle (15,21) jeweils von mindestens einer Ventilscheibe (17,31) beeinflusst wird, so dass ein erstes und ein zweites Dämpfventil (19,23) vorliegen, wobei die beiden Dämpfventilkörper (9,25) auf einem gemeinsamen Träger (5) befestigt sind und einer der Durchtrittskanäle (21) im Träger (5) ausgeführt ist, wobei der erste Dämpfventilkörper (9) am Träger (5) von einem Befestigungselement fixiert ist, das ein Dämpfventilgehäuse (25) des zweiten Dämpfventils (23) bildet, wobei die mindestens eine Ventilscheibe des zweiten Dämpfventils (31) unabhängig von der Befestigung (9) des ersten Dämpfventilkörpers über ein separates Befestigungselement (45,55) ausgeführt ist, und das Dämpfventilgehäuse (25) des zweiten Dämpfventils (23) einteilig ausgeführt ist.

## Beschreibung

Die Erfindung betrifft eine Dämpfventileinrichtung mit einer mehrstufigen Dämpfkraftkennlinie gemäß dem Oberbegriff von Patentanspruch 1.

Bei einem Schwingungsdämpfer mit einer konventionellen Dämpfventileinrichtung, d. h. nicht über einen Aktuator willkürlich verstellbar, läuft die Abstimmung der Dämpfkraftkennlinie stets auf einen Kompromiss aus. Einerseits soll die Fahrsicherheit gewährleistet werden, wofür eine große Dämpfkraft sinnvoll ist und andererseits soll ein Komfortanspruch erfüllt werden. Dieser Widerspruch ist mit einem konventionellen Dämpfventil nur schwerlich zu leisten.

Aus der DE 20 22 021 A1 ist ein Schwingungsdämpfer mit einer Dämpfventileinrichtung bekannt, deren Dämpfkraftkennlinie mindestens vier Dämpfkraftkennliniebereiche aufweist (Fig. 9). Dazu kommen zwei parallel geschaltete Dämpfventile zur Anwendung, die ein unterschiedliches Öffnungsverhalten und im maximalen Öffnungszustand eine unterschiedliche Drosselwirkung erzielen.

Mit einer derartigen Konstruktion lassen sich die notwendige Dämpfkräfte deutlich besser den verschiedenen Anforderungen anpassen.

Die DE 17 80 003 A1 betrifft einen Schwingungsdämpfer, der in der Ausführung nach Fig. 2 ebenfalls ein erstes und ein zweites Dämpfventil mit unterschiedlicher Öffnungscharakteristik aufweist. Über einen Axialkanal in der Kolbenstange wird das Dämpfmedium dem zweiten Dämpfventil zugeführt. Wenn eine auf den Schweingungsdämpfer einwirkenden Anregung eine definierte Frequenz erreicht, dann verschließt ein Schieber den Zustrom zum zweiten Dämpfventil, so dass die Dämpfkraft nochmals gesteigert werden kann.

Die Aufgabe der vorliegenden Erfindung besteht darin, eine mehrstufige Dämpfventileinrichtung bereitzustellen, die insgesamt einen einfachen Aufbau aufweist und sich mit wenig Aufwand einer vorbestimmten Dämpfkraftkennlinie anpassen lässt.

Erfindungsgemäß wird die Aufgabe dadurch gelöst, der erste Dämpfventilkörper am Träger von einem Befestigungselement fixiert ist, das ein Dämpfventilgehäuse des zweiten Dämpfventils bildet, wobei die mindestens eine Ventilscheibe des zweiten Dämpfventils unabhängig von der Befestigung des ersten Dämpfventilkörpers über ein separates Befestigungselement ausgeführt ist, und das Dämpfventilgehäuse des zweiten Dämpfventils einteilig ausgeführt ist.

Das Dämpfventilgehäuse bildet bei einem Dämpfventil an einer Kolbenstange als Träger die Kolbenmutter, so dass kein zusätzlicher Montageaufwand notwendig ist. Des Weiteren ist der notwendige Bauraum sehr kein, da ein ohnehin notwendiges Bauteil, z. B. die Kolbenmutter in die Bauraumbetrachtung einfließt.

In weiterer vorteilhafter Ausgestaltung ist in dem Dämpfventilgehäuse des zweiten Dämpfventils mindestens ein Querkanal ausgeführt, der den Durchtrittskanal im Träger an die mindestens eine Ventilscheibe anschließt. Das Dämpfventilgehäuse kann durch den Querkanal axial kurz und massiv gehalten werden.

In dem Dämpfventilgehäuse ist mindestens ein Axialkanal mit einem Ende an den Querkanal angeschlossen, wobei ein Axialkanal mit seinem anderen Ende den Austrittsquerschnitt bildet. Der Axialkanal übernimmt die Umlenkung des Dämpfmediums von dem Durchtrittskanal in Richtung der mindestens einen Ventilscheiben des zweiten Dämpfventils.

Gemäß einem vorteilhaften Unteranspruch ist der Querkanal im Bereich einer äußeren Planfläche des Dämpfventilgehäuses ausgeführt. Es werden zwei parallele Planflächen ausgeführt, die als Werkzeugflächen dienen, um ein definiertes Anzugsmoment für den ersten Dämpfventilkörper einleiten zu können.

Der Querkanal kann durch den Träger verlaufen und der Träger kann sich durch das Dämpfventilgehäuse des zweiten Dämpfventils erstrecken. Mit einem einzigen Gewindeabschnitt kann der erste Dämpfventilkörper und die mindestens eine Ventilscheibe des zweiten Dämpfventils fixiert werden.

Der Querkanal im Dämpfventilgehäuse ist endseitig mittels eines Dichtkörpers verschlossen. Als Dichtkörper kann beispielsweise eine einfache Kugel dienen.

Bei einer Alternativvariante verbindet mindestens ein Schrägkanal den Durchtrittskanal mit mindestens einer Ventilscheibe.

Anhand der folgenden Figurenbeschreibung soll die Erfindung näher erläutert werden. Es zeigt:
- Fig. 1: Dämpfventilgehäuse mit mindestens einem Axialkanal
- Fig. 2: Dämpfventilgehäuse mit mindestens einem Schrägkanal

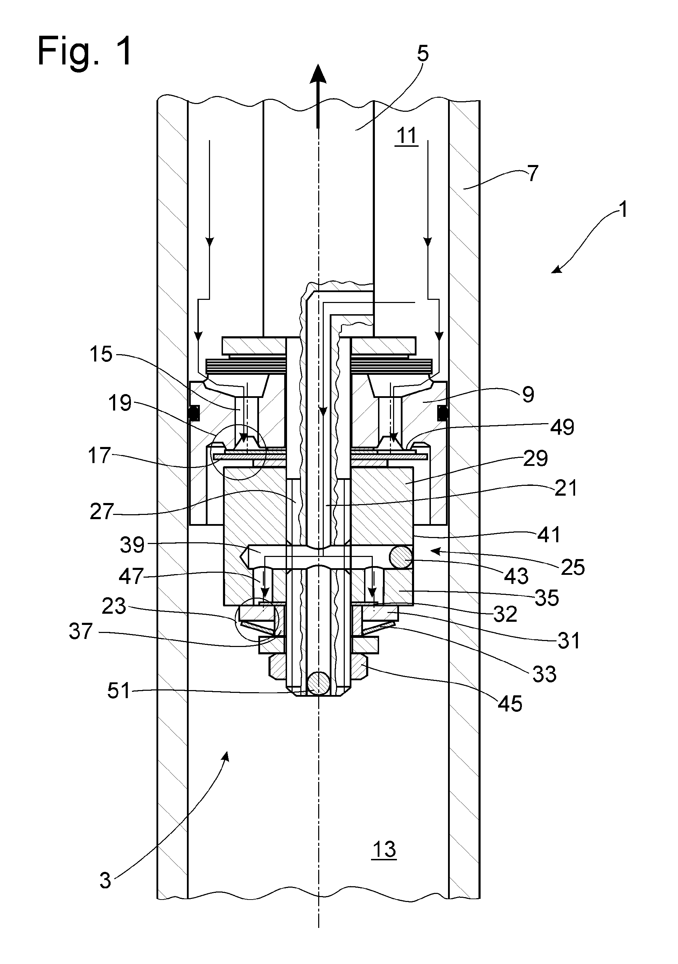

Die Figur 1 zeigt einen Ausschnitt aus einem Schwingungsdämpfer 1 im Bereich einer Dämpfventileinrichtung 3 an einer Kolbenstange 5 als Träger innerhalb eines Zylinders 7. Ein Kolben 9 als erster Dämpfventilkörper und Teil der Dämpfventileinrichtung 3 unterteilt den Zylinder 7 in einen kolbenstangenseitigen und einen kolbenstangenfernen Arbeitsraum 11; 13. In dem Kolben 9 ist pro Durchströmungsrichtung des im Zylinder 7 befindlichen Dämpfmediums mindestens ein Durchtrittskanal 15 ausgeführt, dessen Austrittsöffnung von mindestens einer Ventilscheibe 17 zumindest teilweise abgedeckt ist und damit ein erstes Dämpfventil 19 bildet. In dieser konkreten Ausführungsform sind zwei Durchtrittskanäle für eine Durchströmung bei einer Ausfahrbewegung der Kolbenstange 5 eingezeichnet. Für eine Einfahrbewegung vorgesehene Durchtrittskanäle sind in einer anderen Schnittebene des Kolbens 9 ausgeführt und deshalb nicht sichtbar.

Über einen Durchtrittskanal 21 innerhalb der Kolbenstange 5, der an den kolbenstangenseitigen Arbeitsraum 11 angeschlossen ist, ist ein zweites Dämpfventil 23 dem ersten Dämpfventil 19 hydraulisch parallel geschaltet. Der Durchtrittskanal wird an dem zum kolbenstangenfernen Arbeitsraum weisenden Ende von einem Dichtkörper 51 verschlossen. Das zweite Dämpfventil 23 ist an einem Dämpfventilgehäuse 25 im kolbenstangenfernen Arbeitsraum 13 ausgeführt. Befestigt ist das Dämpfventilgehäuse 25 an einem Kolbenstangenzapfen 27, der auch den Kolben 9 für das erste Dämpfventil 19 trägt. Ein Deckel des Dämpfventilgehäuses 25 fungiert als Kolbenmutter für den Kolben 9. Das zweite Dämpfventil 23 umfasst beispielsweise mindestens eine axial bewegliche Ventilscheibe 31, die von einer Tellerfeder 33 auf einen Boden 35 des Dämpfventilgehäuses 25 vorgespannt wird. Die konkrete Ausführung im Zusammenhang mit der Ventilscheibe 31 des zweiten Dämpfventils 23 ist von der geforderten Dämpfkraftkennlinie abhängig. Die Ventilscheibe 31 wird von einer Hülse 37 auf dem zentralen bolzenförmigen Kolbenstangenzapfen 27 geführt. Über das einteilige Dämpfventilgehäuse 25 ist der erste Dämpfventilkörper 9 unabhängig von dem zweiten Dämpfventil an dem Träger bzw. dem Kolbenstangenzapfen 27 fixiert. Würde man die Ventilscheibe 31 des zweiten Dämpfventils 23 entfernen wolle, dann müsste man die Befestigung des Kolbens 9 nicht antasten.

In dem Dämpfventilgehäuse 25 des zweiten Dämpfventils 23 ist mindestens ein Querkanal 39 ausgeführt, der den Durchtrittskanal 21 in der Kolbenstange 5 an die mindestens eine Ventilscheibe 31 anschließt. Der Querkanal 39 ist als Sacklochöffnung ausgeführt und erstreckt sich ausgehend von einer äußeren Planfläche 41 des Dämpfventilgehäuses 25. Endseitig wird der Querkanal 39 von einem Dichtkörper 43, beispielsweise einer Kugel verschlossen. In dem dargestellten Ausführungsbeispiel erstreckt sich der Kolbenstangenzapfen 27 durch das gesamte Dämpfventilgehäuse 25, so dass die mindestens eine Ventilscheibe 31 durch eine Mutter 45 fixierbar ist. Man kann alternativ eine separate Schraube verwenden und den Kolbenstangenzapfen 27 entsprechend kürzer ausführen.

Mindestens ein Axialkanal 47, ebenfalls als Sacklochöffnung ausgeführt, ist mit einem Ende an den Querkanal 39 angeschlossen und bildet mit seinem anderen Ende den Austrittsquerschnitt, der mit der mindestens einen Ventilscheibe 31 zusammenwirkt. Optional kann eine Drosselscheibe 32 eingesetzt werden, die den Austrittsquerschnitt des mindestens einen Axialkanals beschränkt und damit das Kennlinienverhalten bei großen Strömungsgeschwindigkeiten des Dämpfmediums durch das Dämpfventil 23 in Richtung einer größeren Dämpfkraft verändert.

Bei einer Kolbenstangenbewegung in Pfeilrichtung stehen zwei Dämpfventile 19; 23 zur Verfügung, die für unterschiedliche Dämpfkraftbereiche ausgelegt sind. So kann das erste Dämpfventil 19 bereits bei relativ kleinen Kolbenstangengeschwindigkeiten mit einem an sich bekannten Voröffnungsquerschnitt 49 und anschließend mit den abhebenden Ventilscheiben 17 eine Dämpfkraft erzeugen. Damit lässt sich z. B eine parabelförmige Dämpfkraftkennlinie mit einem anschließenden degressiven Kennlinienverlauf realisieren. Das zweite Dämpfventil 23 mit seiner mindestens einen Ventilscheibe 31 ermöglicht eine weitere Dämpfraftkennlinienstufe, wenn bei nochmals gesteigerter Kolbenstangengeschwindigkeit das zweite Dämpfventil 23 öffnet. Das Dämpfmedium kann über den Durchtrittskanal 21, den Querkanal 39 und den Axialkanälen 47 auf die mindestens eine Ventilscheibe 31 einwirken, so dass es vom Dämpfventilgehäuse 25 abhebt und den Austrittsquerschnitt mehr oder weniger freigibt.

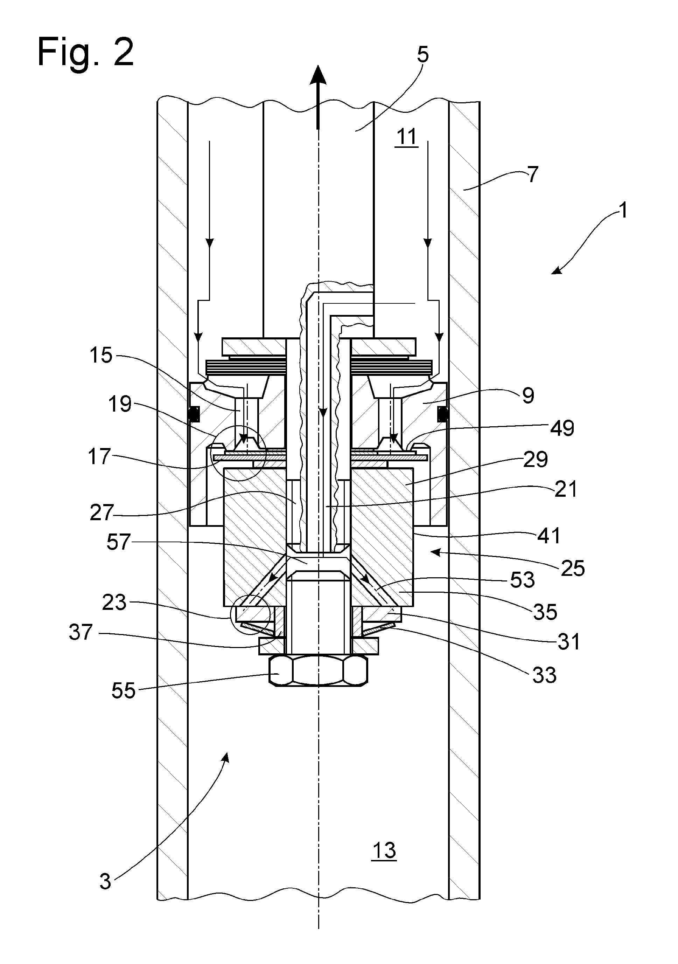

Die Figur 2 zeigt eine Ausführungsform, die dem technischen Prinzip der Fig. 1 folgt. Abweichend wird auf den Querkanal 39 und den Dichtkörpern 43; 51 im Dämpfventilgehäuse 25 verzichtet. Alternativ kommen Schrägkanäle 53 zur Anwendung, die die Funktion der Axialkanäle 47 gemäß der Fig. 1 erfüllen, nämlich den Anschluss des Durchtrittkanals 21 an die mindestens eine Ventilscheibe 31 des zweiten Dämpfventils 23.

Des Weiteren wurde die Befestigung der mindestens einen Ventilscheibe 31 beim zweiten Dämpfventil 23 durch eine zum Kolbenstangenzapfen 27 separate Befestigungsschraube 55 gelöst. Wenn man die Befestigungsschraube 55 und die Länge des Kolbenstangenzapfens 27 entsprechend dimensioniert, dann enthält man einen Verteilerraum 57, an den die Schrägkanäle angeschlossen sind.

### Bezugszeichenliste

- 1: Schwingungsdämpfer
- 3: Dämpfventileinrichtung
- 5: Kolbenstange
- 7: Zylinder
- 9: Kolben
- 11: kolbenstangenseitiger Arbeitsraum
- 13: kolbenstangenferner Arbeitsraum
- 15: Durchlasskanal (Kolben)
- 17: Ventilscheibe
- 19: erstes Dämpfventil
- 21: Durchtrittskanal (Kolbenstange)
- 23: zweites Dämpfventil
- 25: Dämpfventilgehäuse
- 27: Kolbenstangenzapfen
- 29: Deckel
- 31: Ventilscheibe
- 32: Drosselscheibe
- 33: Tellerfeder
- 35: Boden
- 37: Hülse
- 39: Querkanal

- 43: Dichtkörper
- 45: Mutter
- 47: Axialkanal
- 49: Voröffnungsquerschnitt
- 51: Dichtkörper
- 53: Schrägkanäle
- 55: Befestigungsschraube
- 57: Verteilerraum
- 41: Planfläche

## Patentansprüche

1. Dämpfventileinrichtung (3) für einen Schwingungsdämpfer (1), umfassend einen ersten und einen zweiten Dämpfventilkörper (9; 25) mit mindestens zwei hydraulisch parallel geschalteten Durchtrittskanälen (15; 33) für eine Strömungsrichtung eines Dämpfmedium, wobei Austrittsquerschnitte der mindestens zwei Durchtrittskanäle (15; 21) jeweils von mindestens einer Ventilscheibe (17; 31) beeinflusst wird, so dass ein erstes und ein zweites Dämpfventil (19; 23) vorliegen, wobei die beiden Dämpfventilkörper (9; 25) auf einem gemeinsamen Träger (5) befestigt sind und einer der Durchtrittskanäle (21) im Träger (5) ausgeführt ist, **dadurch gekennzeichnet,**
**dass** der erste Dämpfventilkörper (9) am Träger (5) von einem Befestigungselement fixiert ist, das ein Dämpfventilgehäuse (25) des zweiten Dämpfventils (23) bildet, wobei die mindestens eine Ventilscheibe des zweiten Dämpfventils (31) unabhängig von der Befestigung des ersten Dämpfventilkörpers (9) über ein separates Befestigungselement (45; 55) ausgeführt ist, und das Dämpfventilgehäuse (25) des zweiten Dämpfventils (23) einteilig ausgeführt ist.

2. Dämpfventil nach Anspruch 1,
**dadurch gekennzeichnet,**
**dass** in dem Dämpfventilgehäuse (25) des zweiten Dämpfventils (23) mindestens ein Querkanal (39) ausgeführt ist, der den Durchtrittskanal (21) im Träger (5) an die mindestens eine Ventilscheibe (5) anschließt.

3. Dämpfventil nach Anspruch 2,
**dadurch gekennzeichnet,**
**dass** mindestens ein Axialkanal (47) mit einem Ende an den Querkanal (39) angeschlossen ist und mit seinem anderen Ende den Austrittsquerschnitt bildet.

4. Dämpfventil nach Anspruch 2,
**dadurch gekennzeichnet,**
**dass** der Querkanal (39) im Bereich einer äußeren Planfläche (41) des Dämpfventilgehäuses (25) ausgeführt ist.

5. Dämpfventil nach Anspruch 2,
**dadurch gekennzeichnet,**
**dass** der Querkanal (39) durch den Träger (5) verläuft und sich der Träger (5) durch das Dämpfventilgehäuse (25) des zweiten Dämpfventils (23) erstreckt.

6. Dämpfventil nach Anspruch 2,
**dadurch gekennzeichnet,**
**dass** der Querkanal (39) im Dämpfventilgehäuse (25) mittels eines Dichtkörpers (43; 51) endseitig verschlossen ist.

7. Dämpfventil nach Anspruch 1,
**dadurch gekennzeichnet,**
**dass** mindestens ein Schrägkanal (53) den Durchtrittskanal (21) mit mindestens einer Ventilscheibe (31) verbindet.
